# FASCICULE DE BREVET EUROPEEN

(11) **EP 1 163 459 B1**
(45) Date de publication et mention de la délivrance du brevet: **22.03.2006**
(21) Numéro de dépôt: 01903960.1
(22) Date de dépôt: 16.01.2001
(51) Int. Cl.: F16G 3/00

(54) **DISPOSITIFS DE JONCTION POUR BANDES TRANSPORTEUSES ET PROCEDE DE FABRICATION DE CEUX-CI**
VERBINDUNGSVORRICHTUNGEN FÜR FÖRDERBÄNDER UND VERFAHREN ZU IHRER HERSTELLUNG
DEVICE FOR LINKING CONVEYOR BELTS AND METHOD FOR MANUFACTURING THE SAME

(30) Priorité: 19.01.2000 FR 0000735
(43) Date de publication de la demande: 19.12.2001
(73) Titulaire: Aser, F-42405 Saint-Chamond (FR)
(72) Inventeur: JAKOB, Horst, F-30360 Deaux (FR)
(74) Mandataire: Breese, Pierre
(86) Numéro de dépôt international: PCT/FR2001/000130
(87) Numéro de publication internationale: WO 2001/053715

(56) Documents cités:
- WO-A-95/11393
- WO-A-97/26466
- DE-A- 2 532 409

## Description

La présente invention concerne le domaine des dispositifs de jonction non déconnectables destinés à relier les extrémités de bandes transporteuses. Dans un but de simplification le terme de bande transporteuse aura, par convention, dans la présente description aussi bien le sens de bande transporteuse que celui de courroie.

On a proposé dans le passé des dispositifs de jonction dotés d'un profil en forme générale de H susceptibles d'être fixés sur les extrémités d'une bande transporteuse. Ces dispositifs de jonction comportent deux paires d'ailes de fixation, qui correspondent aux branches du H du profil et une partie intermédiaire centrale, qui correspond à la barre du H du profil. Les extrémités de la bande transporteuse sont introduites respectivement entre les ailes d'une des paires d'ailes. La fixation des ailes sur les extrémités de la bande transporteuse s'effectue au moyen de rivets, de pointes, de crampons, de systèmes vis-écrous, ou encore par collage à froid ou par vulcanisation à plat des ailes contre les surfaces plates extérieures de la bande transporteuse engagées entre les ailes. Ces dispositifs de jonction sont réalisés en une matière souple et élastique, par exemple en caoutchouc vulcanisé, ou en une matière de synthèse telle que du polyuréthane et ils comportent une armature incorporée. Cependant, les armatures proposées étaient réalisées en tissu ordinaire, et n'étaient pas susceptibles d'un allongement suffisant pour subir, sans dommage pour le dispositif de jonction, le passage sur des rouleaux, moteurs ou de renvoi, entraînant ou renvoyant la bande transporteuse aux extrémités de laquelle est monté le dispositif de jonction considéré.

Le déposant de la présente demande a déjà proposé, dans un brevet précédent (EP-A-0 674 754), d'utiliser des tissus, ou des tricots. En ce qui concerne les tissus, il avait proposé des tissus comportant une trame tissée volontairement de façon lâche pour permettre à cette trame, disposée dans le sens longitudinal, de se prêter jusqu'à ce que les fils de trame soient tendus et transmettent les tractions, ceci pour permettre d'absorber sans dommage les différences de parcours qui se produisent dans le dispositif de jonction lors du passage sur les rouleaux, moteurs ou de renvoi, sur lesquels passe la bande transporteuse sur laquelle est monté le dispositif de jonction, les fils lâches ainsi tendus permettant alors de transmettre une force de traction pour laquelle ils sont prévus, en étant ramenés ensuite par la matière constitutive. Le déposant de la présente demande avait également proposé d' incorporer des plaquettes ou des rondelles dans les ailes des dispositifs de jonction destinées à la fixation de ceux-ci sur les extrémités de la bande transporteuse, ces plaquettes ou rondelles comportant un trou destiné à l'introduction de pointes, de rivets, de crampons, de vis, autrement dit de tous les dispositifs à tige susceptibles de traverser une aile, la bande transporteuse puis l'autre aile, en étant fixés de l'autre côté de l'autre aile. Dans une version comportant des câbles, des rondelles étaient arrimées à l'armature constituée de câbles, grâce à des boucles formées par ces câbles et entourant les rondelles percées. Dans le cas d'armatures en tissu ou en tricot, des trous étaient pratiqués dans les ailes et par conséquent dans l'armature.

Malgré les apports essentiels que constituaient les solutions proposées précédemment par le déposant de la présente demande, il s'est avéré en pratique que des limites subsistaient pour l'utilisation des dispositifs de jonction ainsi réalisés, à savoir :
- les tissus avec embubage trame ne se prêtaient pas suffisamment dans le sens de défilement de la bande transporteuse lors du passage sur certains rouleaux, moteurs ou de renvois, rencontrés dans la pratique,
- la mise en auge de la bande transporteuse devait faire face à une trop grande rigidité du dispositif de jonction, empêchant celui-ci de suivre correctement la bande transporteuse lorsque les bords de celle-ci étaient relevés pour la mise en auge, en vue du transport de vrac,
- la fixation des ailes faisant appel à de simples rondelles de renfort percées et à des moyens de fixation classiques avait tendance, dans certains cas, à déchirer les armatures à l'emplacement des trous pratiqués dans les armatures, dont la résistance, en raison de la multiplicité des légères lésions provoquées par ces trous, se trouvait diminuée,
- les dispositifs de jonction réalisés par moulage ou par injection, exigeaient pour leur fabrication autant de moules que d'épaisseurs de bandes transporteuses rencontrées sur le terrain, et devaient être fabriqués, de ce fait, en très petites séries, ce qui augmentait le prix de revient, à la fabrication, au stockage et à la distribution.

L'objet de la présente invention est de proposer des solutions aux problèmes exposés ci-dessus.

Le dispositif de jonction selon l'invention est défini par les caractéristiques de la revendication 1.

Le présent déposant a découvert que pour résoudre le problème de l'extensibilité nécessaire des ailes des dispositifs de jonction munis d'armatures en tissu, il était utile que les tissus aient une texture lâche ou à fort embuvage, non seulement en trame, mais également en chaîne. Le déposant a également découvert qu'avec ces tissus lâches en chaîne aussi bien qu'en trame, il était possible d'utiliser les tissus en une ou plusieurs couches, selon deux dispositions.

Selon une première disposition, les tissus d'armature sont disposés avec la chaîne, ou la trame; orientée dans le sens longitudinal des dispositifs de jonction, c'est-à-dire, par convention, dans le sens de défilement de la bande transporteuse qui doit y être fixée et ce, indépendamment des dimensions effectives des dispositifs de jonction. De la même manière, dans la présente description, le sens transversal du dispositif de jonction sera, par convention, le sens perpendiculaire au sens longitudinal défini ci-dessus.

Selon une deuxième disposition, les tissus d'armature, dont la chaîne et la trame sont tissées de façon lâche, sont orientés de façon telle que la chaîne, ou la trame, également lâches, forment un angle par rapport au sens longitudinal du dispositif de jonction, et ce, que le tissu soit disposé en une seule couche, ou en plusieurs. L'angle le plus favorable s'est avéré être un angle d'approximativement 45°.

Tout ce qui vient d'être dit concernant les tissus tissés de façon lâche aussi bien en chaîne qu'en trame, vaut pour des tricots, que l'on sait tricoter de façon lâche en chaîne, tout en ajoutant une trame qui peut être incorporée de façon lâche.

Grâce aux solutions indiquées plus haut, le déposant a obtenu des armatures aptes à se prêter à tous les allongements exigés par les passages de bandes transporteuses sur l'ensemble des rouleaux qui ont été rencontrés en pratique.

Cependant, les problèmes posés par la fixation des ailes sur les extrémités des bandes transporteuses, et en particulier celui posé par les lésions des armatures, restaient entiers malgré les perfectionnements concernant la structure de l'armature décrits plus haut.

Le déposant a donc conçu et mis au point des rondelles perfectionnées dont la mise en place s'effectue de manière à ne pas léser, ou en tout cas à léser très peu, l'armature tissée ou tricotée. Ces rondelles comportent une cuvette destinée à recevoir la tête du moyen de fixation à tige, cette cuvette se prolongeant, au moins dans certaines rondelles, par une partie tubulaire. Les rondelles comportent également au moins un ergot orienté dans la même direction que la cuvette, c'est-à-dire, vers l'armature, cet ergot étant placé à la périphérie de la rondelle et servant à empêcher la rotation de la rondelle. L'armature, constituée d'une ou de plusieurs couches de tissu et de tricot, comme décrit plus haut, est disposée autour de la partie tubulaire prolongeant la cuvette perpendiculairement au plan général de la rondelle, de façon telle que les bords d'armature entourant la partie tubulaire soient relevés le long de celle-ci, en formant également un angle droit, ou approximativement droit avec le plan de l'armature. Ces bords d'armature relevés adhèrent à la partie tubulaire. Avec une telle conformation de la rondelle et une telle disposition de celle-ci dans l'armature, l'armature n'est pas percée avec découpe des fils du tissu ou du tricot, les fils étant simplement écartés. Bien entendu, il peut arriver qu'un fil casse mais la lésion ainsi occasionnée est bien moins grave que celle créée par des découpes classiques de trous dans les ailes, par perçage ou à l'emporte-pièce. De plus, il est possible de réduire le diamètre de la rondelle grâce au fait que la rondelle n'adhère pas qu'à plat à l'armature, par sa tête, mais qu'également elle adhère dans le sens perpendiculaire, par les surfaces extérieures de la partie tubulaire, aux bords relevés de l'armature. L'ancrage de la cuvette dans l'aile du dispositif de jonction est ainsi particulièrement bon.

De plus, du fait que la rondelle a une tête de dimension réduite, elle peut, si nécessaire, ce qui sera utile en combinaison avec le moyen de fixation décrit plus loin, pivoter de quelques degrés par rapport à la perpendiculaire au plan général de l'aile considérée, grâce à l'articulation de fait que constitue l'angle formé entre le plan de la plus grande partie de l'armature et les bords redressés de celle-ci, adhérant à la partie tubulaire de la rondelle. Ces rondelles ainsi conformées et mises en place sont disposées dans les ailes de la partie inférieure.

Dans la partie supérieure, les rondelles comportent seulement une cuvette percée, mais pas de partie tubulaire et, dans la partie inférieure, les rondelles comportent une cuvette, prolongée par une partie tubulaire, comme décrit plus haut. La partie tubulaire de ces rondelles est taraudée intérieurement. Cette disposition permet l'utilisation d'une vis en tant que moyen de fixation. En effet une vis, de préférence auto-taraudeuse, introduite dans les rondelles sans partie tubulaire, est vissée dans l'extrémité de la bande transporteuse, préalablement introduite dans l'espace entre les deux ailes d'une même paire, jusqu'à venir en butée contre la partie intermédiaire du dispositif de jonction ; puis la vis rencontre le trou taraudé de la partie tubulaire de la rondelle de l'autre aile, la mobilité relative de la partie tubulaire par rapport à la perpendiculaire au plan général de la rondelle, autorisant un auto-centrage mutuel de la vis et de la partie tubulaire. La vis, en se vissant dans le taraudage, exerce une traction importante sur la rondelle, par l'intermédiaire de la partie tubulaire de celle-ci, cette traction aboutissant à un serrage efficace des deux ailes contre les surfaces extérieures planes de l'extrémité de la bande transporteuse. Cette traction est transmise à l'aile inférieure, à la fois par la tête de la rondelle et par la surface extérieure de la partie tubulaire à laquelle adhère l'armature, les surfaces de l'armature et de la partie tubulaire travaillant en cisaillement.

En pratique les rondelles, et par conséquent les vis, sont disposées de façon décalée sur la surface des ailes de manière à répartir au mieux les points de serrage.

Des perfectionnements supplémentaires sont expliqués plus loin en relation avec la description d'une forme de réalisation préférée, en rapport avec les figures du dessin illustrant la présente description.

Cependant, l'excellence de ces moyens de fixation des ailes aux extrémités de la bande transporteuse, a permis au déposant de résoudre l'autre problème posé initialement, à savoir celui de la multiplicité des moules et des produits moulés devant faire face aux épaisseurs variées de bandes transporteuses. La solution trouvée consiste à produire les dispositifs de jonction en trois parties distinctes : une partie constituant des ailes supérieures gauche et droite formant une seule pièce, une partie constituant des ailes inférieures gauche et droite formant une seule pièce, et une partie intermédiaire, correspondant à la barre médiane du profil en H.

La partie supérieure comporte deux ou plusieurs rondelles du type doté d'une partie tubulaire, lisse à l'intérieur, incorporées dans la partie supérieure sur une ligne médiane séparant de façon imaginaire l'aile gauche de l'aile droite, les parties tubulaires des rondelles étant dirigées vers le bas.

La partie inférieure est dotée de deux ou de plusieurs rondelles du type comportant une partie tubulaire taraudée, incorporées dans la partie inférieure sur une ligne médiane séparant de façon imaginaire l'aile gauche de l'aile droite, les parties tubulaires taraudées étant orientées vers le haut.

Il doit être clair que les notions de supérieur et d'inférieur ne servent qu'à la description et qu'elles peuvent être inversées dans la pratique.

La partie intermédiaire qui a une forme parallélépipédique et qui peut être produite, stockée, et distribuée en plusieurs hauteurs comporte des douilles incorporées qui les traversent dans le sens de la hauteur, et qui sont espacées de la même manière que les rondelles incorporées dans la zone médiane des parties supérieure et inférieure, de façon à pouvoir se trouver en alignement avec celles-ci lorsque l'on dispose les parties supérieure et inférieure de part et d'autre de la partie intermédiaire. Les diamètres des ensembles cylindriques constitués par les parties tubulaires des rondelles comportant, adhérant sur leur surface extérieure, les parties relevées de l'armature et des couches de caoutchouc ou de matière de synthèse entre lesquelles la ou les couches d'armature sont prises en sandwich, sont tels qu'il est possible d'introduire ces ensembles cylindriques dans les douilles correspondantes de la partie intermédiaire. Il est alors possible de visser des vis dont la tête se loge dans les cuvettes des inserts à partie tubulaire lisse, les fûts filetés des vis passant sans se visser dans les douilles, dont le diamètre intérieur est supérieur au diamètre extérieur de la vis d'au moins deux fois l'épaisseur de l'armature entourant la partie tubulaire de la rondelle. Les vis se vissent ensuite dans le taraudage des parties tubulaires taraudées des rondelles incorporées, comme décrit plus haut, dans la zone médiane des parties inférieures.

Des perfectionnements supplémentaires seront décrits plus loin en relation avec une forme de réalisation préférée illustrée par les figures.

Les essais réalisés ont démontré non seulement la grande qualité de cet assemblage selon l' invention, mais, de plus, la fabrication se trouve très simplifiée par rapport à un dispositif de jonction réalisé en une seule pièce par moulage ou par injection. En effet, la confection des armatures et leur disposition dans les moules se trouve considérablement simplifiée en réalisant séparément une partie supérieure comportant une aile supérieure gauche et une aile supérieure droite reliées par une partie médiane, une partie inférieure comportant une aile inférieure gauche et une aile inférieure droite reliées par une partie médiane, et une partie intermédiaire munie de douilles qui peut être réalisée en plusieurs hauteurs différentes.

Le procédé de fabrication d'un dispositif de jonction selon l'invention est défini par les caractéristiques des revendications 18 et 20.

Une forme de réalisation préférée de la présente invention va maintenant être décrite en détail en relation avec les dessins dans lesquels :
la figure 1 est une vue en plan d'un dispositif de jonction selon la présente invention, vu par le dessus,
la figure 2 est une vue en coupe longitudinale selon la ligne A-A de la figure 1 d'un dispositif de jonction selon la présente invention, représentant en éclaté les différents éléments qui le constituent,
la figure 3 est une vue en coupe longitudinale selon la ligne A-A de la figure 1, représentant le dispositif de jonction selon la présente invention de la figure 2, ses trois éléments étant assemblés selon l'invention,
la figure 4 est une vue fragmentaire agrandie, en coupe, du mode d'assemblage représenté sur la figure 3,
la figure 5 est une vue en coupe selon la ligne A-A de la figure 1 du dispositif de jonction selon la présente invention de la figure 3, monté sur les deux extrémités d'une bande transporteuse,
les figures 6, 7 et 8 représentent les phases successives de la mise en place d'un insert taraudé dans la partie inférieure d'un dispositif de jonction selon l'invention.

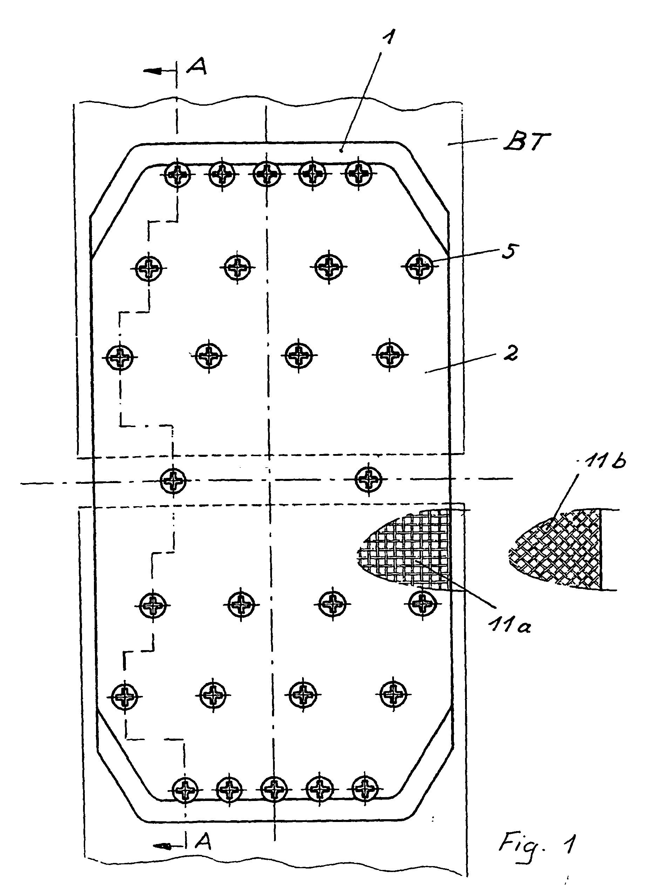

La figure 1, qui est une vue en plan, par le dessus, d'un dispositif de jonction selon la présente invention, fait apparaître une plaque supérieure 2 d'un dispositif de jonction 1. On remarque également les têtes des vis 5 qui constituent le moyen d'assemblage préféré des dispositifs de jonction selon l'invention, utilisées dans la forme de réalisation préférée décrite ici. Les écorchés 11a et 11b font apparaître deux types d'armatures tissées selon l'invention; dans l'armature 11a le tissu est disposé de façon telle que ses fils de trame, ou bien ses fils de chaîne, sont orientés au moins approximativement dans le sens longitudinal du dispositif de jonction. Nous rappelons que par convention le sens longitudinal du dispositif de jonction est, dans la présente description, le sens longitudinal de la bande transporteuse, BT sur la figure 1, le dispositif de jonction étant monté sur les extrémités de la bande transporteuse BT qu'il relie. Le sens transversal du dispositif de jonction est, selon la même convention, le sens perpendiculaire au sens longitudinal. Cette convention est appliquée quelles que soient les dimensions effectives du dispositif de jonction dans ces deux directions. Le dispositif de jonction de la figure 1 est composé de trois éléments : un élément formant plaque supérieure 2, un élément intermédiaire situé sous la partie médiane de la plaque qui n'est pas visible sur la figure 1 autrement que par les deux lignes de pointillés situées de part et d'autre des deux vis 5 médianes, et un élément formant plaque inférieure 3, non visible sur la figure 1, situé sous l'élément intermédiaire et sous l'élément formant plaque supérieure 2.

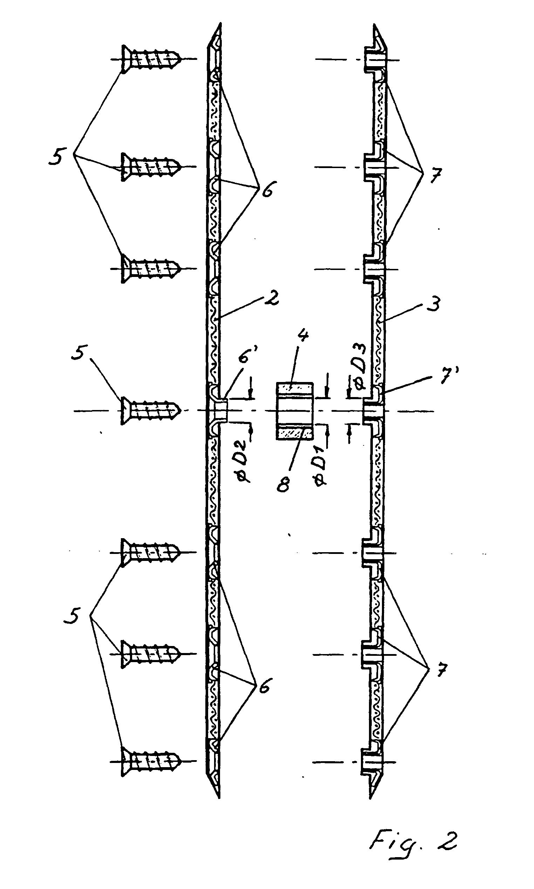

La coupe éclatée de la figure 2 fait apparaître successivement des vis d'assemblage 5, la plaque supérieure 2, les inserts 6 et 6' incorporés dans la plaque supérieure 2 ; l'élément intermédiaire 4 comportant une douille traversante 8 incorporée, disposée verticalement la plaque inférieure 3 comportant des inserts taraudés 7 et 7'. Les inserts 6 se présentent de façon générale sous forme de rondelles percées comportant une cuvette apte à loger les têtes des vis 5 destinées à passer dans le trou des rondelles percées. D'autres détails sont décrits plus loin. L'insert central 6' se présente de façon générale comme les inserts 6 mais il comporte une partie tubulaire centrale, dont la surface cylindrique intérieure D2 est apte à laisser passage, avec un très faible jeu, à la vis 5 correspondante, cette vis ne se vissant donc pas dans l'insert 6'. La partie tubulaire centrale de l'insert 6' dépasse à partir de la surface inférieure (droite sur la figure 2) de la plaque supérieure 2.

Les inserts 7 comportent chacun une partie tubulaire centrale dont la surface cylindrique intérieure est taraudée et est apte à recevoir une vis 5 vissée dans le taraudage, lesdites parties tubulaires centrales dépassant à partir de la surface supérieure (gauche sur la figure 2) de la plaque inférieure du dispositif de jonction. Des détails représentant un perfectionnement important sont décrits plus loin en relation avec la figure 8. Les inserts médians 7' de la plaque inférieure se présentent comme les inserts 7.

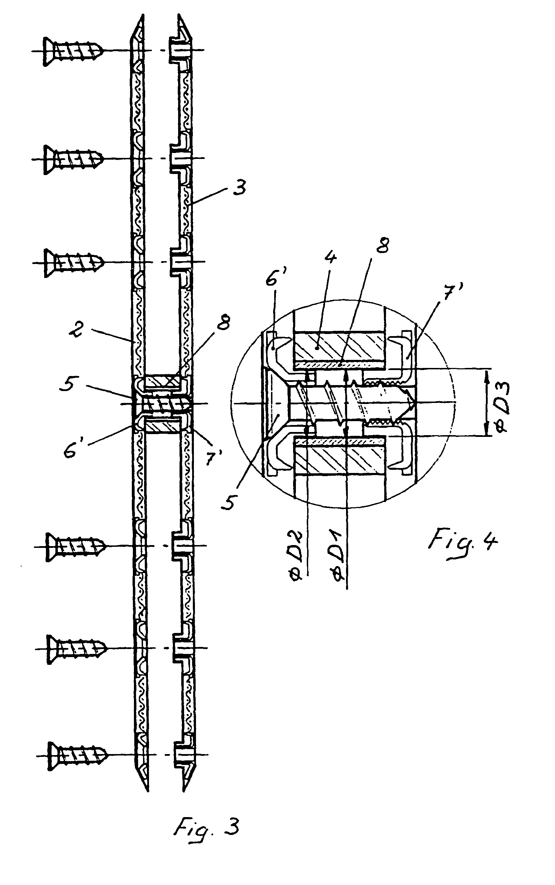

La vue en coupe de la figure 3 permet de comprendre l'assemblage des trois éléments du dispositif de jonction selon l'invention de la forme de réalisation préférée décrite en relation avec les dessins. On voit la vis 5, passant par la partie tubulaire de l'insert central 6', sa tête étant logée dans la cuvette et son fût comportant un filetage mâle passant sans se visser dans la douille 8 de l'élément intermédiaire. La partie inférieure de cette vis 5 est vissée dans le taraudage de l'insert 7'.

On remarque que le dispositif de jonction ainsi assemblé est prêt à être monté sur les extrémités d'une bande transporteuse, au moyen de vis représentée en attente au-dessus de la plaque supérieure.

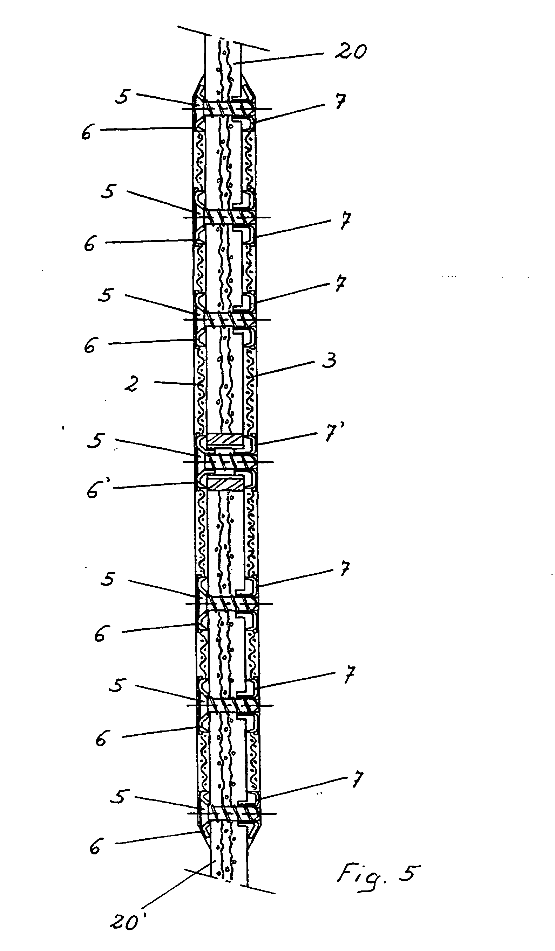

La figure 4 est une vue fragmentaire agrandie de l'assemblage par vis de la figure 3. On y retrouve la vis 5, les inserts 6' et 7', la partie tubulaire de l'insert 7' comportant, adhérant à sa surface extérieure, des parties de l'armature écartées autour de la partie tubulaire lors de mise en place décrite plus loin, de l'insert dans l'armature, lors de la fabrication décrite plus loin, du dispositif de jonction.

On remarque que le diamètre extérieur D2 de la partie de la plaque supérieure 2 enrobant la partie tubulaire de l'insert 6' est très légèrement inférieur au diamètre D1 de la douille 8 de l'élément intercalaire 4, ce qui permet son insertion dans ladite douille 8. De même le diamètre D3 de la partie de la plaque inférieure enrobant la partie tubulaire taraudée de l'insert 7' est lui aussi très légèrement inférieur au diamètre intérieur D 1 de la douille 8.

La figure 5 montre, toujours selon la même coupe que sur les figures précédentes, le dispositif de jonction de la forme de réalisation préférée monté sur les extrémités 20, 20' d'une bande transporteuse. Les vis 5 sont engagées dans les inserts 6, et, lors de leur vissage, sans avant-trou du fait qu'elles sont auto-taraudeuses, elles traversent l'épaisseur de la bande transporteuse. Etant donné que les cuvettes des inserts 6 ne sont pas prolongées par des parties tubulaires, et que les trous des rondelles des inserts 6 ont un diamètre volontairement supérieur au diamètre des filets des vis 5, les vis 5 peuvent aisément osciller si nécessaire, ce qui peut être le cas si elles n'arrivent pas parfaitement centrées dans les taraudages des inserts 7, après avoir traversé la bande transporteuse.

Des détails importants dans les figures 7 et 8 consistent dans le fait que la version la plus perfectionnée de forme de réalisation préférée du dispositif de jonction selon l'invention, le taraudage des inserts 7 et 7' est habillé d'une couche de matière constitutive du dispositif de jonction, obtenue lors de la vulcanisation, ou du moulage par injection du dispositif de jonction, selon le procédé décrit plus loin. On remarque des parties relevées de l'armature, constituée ici de deux couches de tissu, ou de tricot, prises en sandwich entre des couches de caoutchouc vulcanisé, ou de matière de synthèse, par exemple de polyuréthane. Ces parties relevées adhèrent à la surface extérieure de la partie cylindrique taraudée de l'insert 7'.

On décrira plus loin l'intérêt de ces parties relevées, de même que celui de l'habillage 15 du taraudage 16 des inserts 7 et 7'.

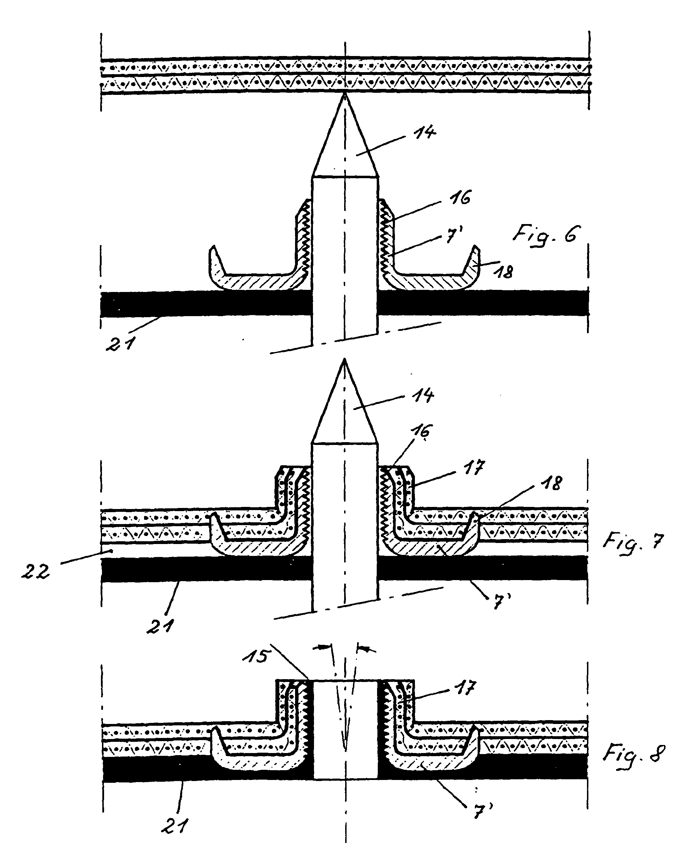

Ci-après l'explication des figures 6 et 7 permet de comprendre le processus grâce auquel on obtient l'incorporation de l'insert 7' représenté à l'état fini sur la figure 8.

Sur la figure 6, on voit une couche de matière vulcanisable ou thermoformable 21, représentée en noir, traversée par une pointe 14. Cette pointe 14 fait avantageusement partie d'un demi-moule de vulcanisation (dans le cas où la matière constitutive de base du dispositif de jonction est un caoutchouc vulcanisable) ou d'un moule d'injection lorsque la matière constitutive de base est une matière de synthèse, par exemple un polyuréthane. Au-dessus de la couche représentée en noir est enfilé un insert 7'. On remarque que le diamètre de la tige est inférieur au diamètre des pointes des filets du taraudage 16. Ceci est fait volontairement en vue de ménager de la place pour que lors de la vulcanisation ou de l'infection, ultérieure, de la matière flue entre la pointe 14 et le taraudage, en formant, de ce fait, l'habillage 15 visible figure 8. Les couches d'armature ne sont pas encore enfilées sur la pointe 14.

Sur la figure 7 les couches d'armature sont enfilées sur la pointe 14 et amenées contre l'insert 7', les ergots 18 de l'insert se piquant dans les couches d'armature et les couches de matière entre lesquelles elles sont prises en sandwich. On remarque qu'à ce stade, c'est-à-dire, avant fermeture du moule et vulcanisation, un espace 22 représenté en blanc sépare la couche inférieure d'armature et la couche inférieure 21 de matière représentée en noir.

On comprend que lors de la vulcanisation, sous l'effet de la pression, la couche inférieure 21 de matière, d'une part vient s'appliquer contre la couche inférieure d'armature, à laquelle elle adhère, et d'autre part flue entre la pointe 14 et le taraudage de l'insert 7', en réalisant ainsi l'habillage 15 de taraudage visible figure 8.

On remarque également des ergots 18 piqués dans deux couches d'armature placées en sandwich entre des couches de caoutchouc (ou de matière de synthèse). Ces ergots 18, dont le nombre peut aller de 1 à plusieurs, par exemple 4, ou même plus, ont pour but d'empêcher l'insert taraude 7' de tourner lorsque la vis est vissée dans le taraudage 16, d'autant plus que dans la version la plus perfectionnée de la forme de réalisation préférée décrite ici, la vis exerce un couple important lors de son vissage dans le taraudage.

D'ailleurs des ergots 18 sont également avantageusement prévus sur les inserts 6, 6 et 7, le même problème se posant d'empêcher les inserts de tourner lors du vissage des vis 5, des ergots étant cependant moins indispensables dans les inserts 6 et 6', la vis n'exerçant éventuellement un couple que par frottement de la tête dans la cuvette des inserts 6 et 6', en fin de vissage. Cependant, il est plus prudent de prévoir au moins un ergot 18, sinon plusieurs, par exemple 4, sur toutes les sortes d'inserts.

Dans le cas où la matière constitutive du dispositif de jonction selon l'invention n'est pas un caoutchouc vulcanisable mais, une matière de synthèse, par exemple du type polyuréthane, un processus similaire est réalisé en utilisant l'injection. Ceci implique quelques variantes dans le processus, décrites ci-après. D'une part la réalisation de l'armature prise en sandwich entre des couches de matière de synthèse n'est pas aussi facile que dans le cas du caoutchouc vulcanisable. On peut avoir recours, dans le cas d'une matière de synthèse, comme le polyuréthane, à une imprégnation de l'armature, tissu ou tricot, avec du polyuréthane d'imprégnation ; on peut également avoir recours à un calandrage de feuilles de polyuréthane sur la couche ou les couches d'armature. D'autre part, en ce qui concerne la couche extérieure 21, celle-ci n'existe pas préalablement, comme dans le cas du caoutchouc vulcanisé, mais elle est réalisée par injection, dans le moule où est placé le sandwich de couches d'armatures enfilées sur les pointes 14 et sur les inserts 16. Ainsi, dans le cas d'une matière de synthèse, on aboutit, en procédant ainsi pour tenir compte des nécessités de l'injection, au même résultat final, tel que représenté sur la figure 8, qu'avec le caoutchouc vulcanisable.

Les parties relevées 17 de l'armature montrée figure 7 et 8 qui adhèrent sur la surface extérieure de l'insert 7' rendent celui-ci encore moins sensible à l'arrachement du fait qu'elles travaillent en cisaillement et non en décollement de parties adhérant à plat.

Un autre avantage du mode d'implantation des inserts 7 ou 7', visible à l'état fini sur la figure 8, réside dans le fait que les parties tubulaires des rondelles peuvent osciller légèrement autour de leur position normale, c'est à dire perpendiculaire au plan général de l'aile. Ceci est rendu possible parce que :
- La partie tubulaire des inserts 7 est solidaire des parties relevées de l'armature disposée dans la partie supérieure de l'aile inférieure antre des couches mince de matière constitutive.
- La partie rondelle des inserts 7 ou 7' a un diamètre réduit et est en appui sur la couche épaisse 21 de matière constitutive élastique, sans armature entre cette couche 21 et la partie rondelle de l'insert 7 ou 7'.

Cette possibilité d'oscillation autour de la perpendiculaire présente des avantages dans trois cas :
- Lors de la fixation du dispositif de jonction sur les extrémités de la bande transporteuse, non seulement la vis peut osciller, voir plus haut, par rapport à la partie rondelle des inserts 6, mais la partie tubulaire taraudée des inserts 7 pouvant également osciller elle-même, un auto-centrage de la vis 5 et du taraudage de la partie tubulaire taraudée des inserts 7 peut être obtenu sans difficulté.
- Lors de l'utilisation, au démarrage et au freinage de la bande transporteuse, les différences d'accélération, positives ou négatives, entre la partie supérieure de la bande transporteuse chargée, donc présentant une inertie importante, et la partie inférieure entraînée ou freinée par le dispositif moteur sont absorbées aisément.

La figure 8 montre en pointillé les position que prennent les parties tubulaires des inserts 7 lors des accélérations ou des freinages de la bande transporteuse. Cette configuration joue donc un rôle d'amortisseur.

L'habillage 15, qui pourrait être considéré comme un inconvénient issu du processus de vulcanisation ou de moulage, présente au contraire un avantage inattendu. En effet, la vis 5 mordant dans l'habillage pour se visser dans le taraudage se trouve ensuite très fortement freinée à l'encontre d'un éventuel dévissage qui pourrait autrement être causé par des vibrations par exemple.

Une variante de l'invention prévoit même que le diamètre extérieur du filetage mâle excède légèrement celui du diamètre intérieur du fond du filet du taraudage. En utilisant des vis d'un métal permettant un auto-taraudage, on peut ainsi faire mordre la vis dans le taraudage plus profondément, en assurant de cette façon une liaison très durable entre la vis 5 et l' insert 7.

Le déposant a même obtenu des résultats encore meilleurs en utilisant de telles vis dont non seulement le diamètre extérieur du filetage excède celui du taraudage, mais dont, de plus, le pas est différent de celui du taraudage. Une vis ainsi conformée détruit plus ou moins le taraudage préexistant, tout en reconstituant un nouveau taraudage de plus grand diamètre et d'un pas différent. La présence, en plus de la matière de l'habillage 15, de débris du taraudage initial, rend les vis 5 ainsi vissées, pratiquement indévissables, même dans les conditions d'utilisation les plus sévères. Ceci a été confirmé par des essais.

On comprendra donc l'intérêt des ergots 18 présents sur les inserts, car ceux-ci se trouvent soumis à des couples importants, et auraient tendance à tourner lors du vissage des vis 5 dans les taraudages des inserts, en raison des conformations respectives, décrites plus haut, des vis 5 et des taraudages.

Bien entendu, la forme de réalisation préférée de l'invention qui vient d'être décrite, n'exclut pas des formes de réalisation qui sont moins perfectionnées et moins ambitieuses, mais font appel aux caractéristiques revendiquées dans une ou plusieurs des revendications qui suivent, basées sur la description.

La description qui vient d'être faite de l'incorporation des inserts montre que le moulage séparé de deux plaques et d'un élément intercalaire est beaucoup plus simple que le moulage, d'un dispositif de jonction entier, qui suppose des travaux compliqués de mise en place des couches d'armature, l'insertion de noyaux entre les ailes, laissant passer les pointes, et des opérations de démoulage complexes. Au contraire le processus proposé dans l'invention permet un moulage du type « moule à gaufre » très efficace et le mode d'assemblage proposé ajoute la possibilité de produire, de stocker et de monter des dispositifs de jonction d'épaisseurs variées, avec un investissement en moules et en stocks minimums.

Enfin, on aura remarqué que, dans les formes de réalisations préférées, les ailes des plaques supérieures comportent une couche relativement épaisse de matière constitutive du côté extérieur et que l'armature est implantée dissymétriquement dans l'épaisseur des ailes, les couches de matière entourant la ou les couches d'armature étant d'une faible épaisseur. Cette conformation n'est pas indifférente car elle permet de donner une épaisseur minimum aux ailes des dispositifs de jonction, ce qui est souhaitable pour le fonctionnement de la bande transporteuse, mais elle permet également à l'armature selon l'invention de se prêter au mieux lors des passages sur les rouleaux, moteurs ou de renvois, tout en conservant les excellentes qualités de résistance à la traction préservées par le fait que le système d'assemblage proposé ne provoque pas de lésions, ni dans l'armature des dispositifs de jonction, ni dans celle de la bande transporteuse.

## Revendications

1. Dispositif de jonction non déconnectable, destiné à relier les deux extrémités d'une bande transporteuse, ayant une forme générale de profilé en H, comportant une partie supérieure plate (2), une partie inférieure plate (3), et une partie intermédiaire médiane (4) de forme parallélépipédique disposée entre la partie supérieure plate et la partie inférieure plate, lesdites parties supérieure et inférieure plates étant réalisées en une matière souple et élastique et dotée d'une armature (11a, 11b), **caractérisé en ce que** ladite armature est constituée d'une ou plusieurs couches d'un textile assemblé de façon lâche dans deux directions.

2. Dispositif de jonction selon la revendication 1, **caractérisé en ce que** la ou les couches d'armature sont constituées de tissu tissé de façon lâche aussi bien en chaîne qu'en trame.

3. Dispositif de jonction selon la revendication 1, **caractérisé en ce que** la ou les couches d'armature sont constituées de tricot tricoté lâche en chaîne et comportant une trame insérée disposée de façon lâche dans le tricot.

4. Dispositif de jonction selon la revendication 2 ou 3, **caractérisé en ce que** la ou les couches d'armature sont disposées de façon telle que, dans le cas du tissu, les fils de chaîne ou bien les fils de trame du tissu sont disposés dans le sens longitudinal du dispositif de jonction, les fils de trame ou bien les fils de chaîne, étant disposés dans le sens transversal, ou que dans le cas du tricot, la chaîne du tricot, ou bien la trame insérée dans le tricot, sont orientées dans le sens longitudinal du dispositif de jonction, la trame insérée dans le tricot, ou bien la chaîne du tricot, étant disposée dans le sens transversal du dispositif de jonction.

5. Dispositif de jonction selon la revendication 2 ou 3, **caractérisé en ce que** la ou les couches d'armature sont disposées de façon telle que, dans le cas du tissu, les fils de chaîne ou bien les fils de trame du tissu sont disposés en formant un angle avec le sens transversal du dispositif de jonction, ou que dans le cas du tricot, la chaîne du tricot, ou bien la trame du tricot est disposée en formant un angle avec le sens transversal du dispositif de jonction.

6. Dispositif de jonction selon la revendication 5, **caractérisé en ce que** l'angle formé est approximativement de 45°.

7. Dispositif de jonction selon l'une des revendications précédentes, **caractérisé en ce qu'**il comporte des inserts (6), (7), en forme générale de rondelles, incorporés respectivement dans les ailes de la partie supérieure (2) et dans les ailes de la partie inférieure (3), lesdits inserts (6) comportant en leur zone centrale des cuvettes orientées vers le bas et lesdites cuvettes comportant un trou en leur centre, lesdits inserts (7) étant constitués par une rondelle comportant en son centre une cuvette prolongée dans sa zone centrale par une partie tubulaire taraudée, orientée vers le haut.

8. Dispositif de jonction selon la revendication 7 **caractérisé en ce que** les trous des cuvettes des inserts (6) ont un diamètre supérieur à celui des filetages de vis (5).

9. Dispositif de jonction selon la revendication 7, **caractérisé en ce que** les inserts (6) et (7) comportent chacun au moins un ergot (18) situé à la périphérie des rondelles des inserts (6) et (7) et orienté dans la même direction que les cuvettes respectives des inserts.

10. Dispositif de jonction selon la revendication 8, **caractérisé en ce que** les ergots (18) sont piqués dans l'armature de l'aile dans lesquels les inserts correspondants sont implantés.

11. Dispositif de jonction selon l'une des revendications précédentes constitué de trois parties distinctes, assemblées par vissage, à savoir :
- une partie supérieure plate (2) comportant dans sa zone médiane entre les ailes gauche et droite des inserts (6') analogues aux inserts (7) des ailes de la partie inférieure (3), à la différence près que leur partie tubulaire orientée vers le bas est lisse à l'intérieur au lieu d'être taraudée,
- une partie inférieure plate (3) comportant dans sa zone médiane des inserts (7') identiques aux inserts (7) des ailes de la partie inférieure plate (3),
- un élément intermédiaire (4) de forme parallélépipédique, disposé entre les zones médianes des parties supérieures (2) et inférieure (3), comportant des douilles incorporées disposées verticalement dans l'élément intermédiaire de façon telle qu'elles peuvent être placées en alignement avec les parties tubulaires des inserts (6') et (7'), le diamètre intérieur (D1) des douilles (8) étant très légèrement supérieur aux diamètres (D2) de la partie de la plaque supérieure (2) enrobant la partie tubulaire des inserts (6'), et respectivement du diamètre (D3) de la partie de la plaque inférieure 3 enrobant la partie tubulaire des inserts (7'),
- ces trois parties étant assemblées au moyen de vis (5) passant dans les inserts (6') passant dans l'intérieur des douilles (8) et vissées dans les taraudages des inserts (7').

12. Dispositif de jonction selon la revendication 10, **caractérisé en ce que** les parties supérieures plates (2), ainsi que les parties inférieures plates (3) sont constituées chacune d'une couche (21) de caoutchouc ou de matière de synthèse sous laquelle, ou respectivement sur laquelle, sont disposés les inserts (6, 6', 7, 7') de façon telle que leurs cuvettes ou, le cas échéant, leurs parties tubulaires soient orientées vers le bas en ce qui concerne les plaques supérieures (2), et vers le haut en ce qui concerne les plaques inférieures (3), une ou plusieurs couches de tissu, ou de tricot d'armature étant disposées sous les inserts en ce qui concerne les plaques supérieures, et sur les inserts en ce qui concerne les plaques inférieures, de façon telle que la ou les couches de tissu, ou de tricot, soient revêtues de chaque côté d'une couche mince de matière constitutive, identique ou compatible pour la vulcanisation ou le moulage avec la couche (21) relativement épaisse par rapport aux couches de matière constitutive séparant et recouvrant les couches de tissu, ou de tricot, constituant l'armature, lesdites couches de matière constitutive faisant corps avec la ou les couches de tissu, ou de tricot, ainsi qu'avec la couche épaisse (21) de matière constitutive.

13. Dispositif de jonction selon la revendication 11, **caractérisé en ce que** les couches de tissu ou de tricot, ainsi que les couches fines de matière constitutive qui les séparent et les recouvrent, tout en faisant corps avec elles, sont relevées contre la surface extérieure de la partie tubulaire des inserts qui en comportent une, c'est-à-dire les inserts (7, 7' et 6'), à laquelle elles adhèrent, en laissant l'extrémité de la partie tubulaire, taraudée ou non, des inserts (7, 7' et 6').

14. Dispositif de jonction selon la revendication 12, **caractérisé en ce que** les taraudages des parties tubulaires des inserts (7, 7' et 6') sont habillés d'une couche de matière constitutive qui remplit les creux des filets.

15. Dispositif de jonction selon l'une des revendications précédentes, **caractérisé en ce que** les vis (5) employées pour l'assemblage des dispositifs de jonction selon l'invention, ainsi que pour leur fixation aux extrémités d'une bande transporteuse, sont des vis auto-taraudeuses.

16. Dispositif de jonction selon la revendication 14, **caractérisé en ce que** les vis (5) ont un diamètre de filetage mâle supérieur au diamètre du filetage femelle des taraudages des parties tubulaires des inserts (7, 7' et 6).

17. Dispositif de jonction selon la revendication 15, **caractérisé en ce que** les vis (5) ont un pas différent de celui des taraudages des parties tubulaires des inserts (7, 7' et 6').

18. Procédé de fabrication d'un dispositifde jonction selon l'une quelconque des revendications 10 à 16, **caractérisé en ce que** pour la fabrication des plaques supérieure et inférieure en caoutchouc vulcanisable, on utilise deux demi-moules dont un est muni de pointes (14) partant du fond du moule et que l'on effectue les opérations successives suivantes :
a) une couche (21) relativement épaisse de caoutchouc vulcanisable est enfilée sur les pointes, jusqu'à ce qu'elle atteigne le fond du moule,
b) on enfile sur les pointes les inserts (6, 6', 7 et 7'), les cuvettes et parties tubulaires étant orientées à l'opposé de la couche (21) relativement épaisse, de caoutchouc vulcanisable,
c) on enfile sur les pointes la ou les couches de tissu, ou de tricot, d'armature revêtues préalablement d'une couche fine de caoutchouc vulcanisable, de façon telle que dans le cas d'une couche unique de tissu, ou de tricot d'armature celle-ci soit revêtue des deux côtés par une couche fine de caoutchouc vulcanisable faisant corps avec elle et facilitant sa manipulation et, que dans le cas où il y a deux ou plusieurs couches de tissu, ou de tricot, les couches soient séparées par une ou des couches fines de caoutchouc vulcanisable faisant corps avec elles, les faces extérieures des couches inférieure et supérieure du sandwich ainsi constitué étant revêtues d'une couche fine de caoutchouc faisant corps avec elle, l'armature ainsi constituée formant des parties relevées le long de la surface extérieure des parties tubulaires des inserts (7, 7', 6') qui en comportent,
d) le demi-moule supérieur est mis en place sur le demi-moule inférieur, la pression est appliquée de manière à fermer le moule et à pouvoir opérer la vulcanisation de façon connue,
e) sous l'effet de la pression, la couche épaisse (21) de caoutchouc vulcanisable se plaque contre l'armature en enfermant les inserts, et flue dans le moule en remplissant en particulier l'espace compris entre les filetages des inserts (7, 7' et 6') et les pointes (14) sur lesquelles ces inserts sont enfilés,
f) le démoulage s'opère en retirant les pièces moulées des pointes (14).

19. Dispositif de jonction selon la revendication 17, **caractérisé en ce que** les couches de tissu, ou de tricot, d'armature sont appliquées successivement, les couches étant revêtues préalablement chacune d'une couche fine de caoutchouc vulcanisable.

20. Procédé de fabrication d'un dispositif de jonction selon l'une quelconque des revendications 1 à 16 et partiellement, selon la revendication 17 ou la revendication 18, **caractérisé en ce que** la matière utilisée est un polyuréthane, ou une autre matière moulable par injection, le procédé de fabrication étant analogue au procédé selon les revendications 18 et 19 qui précèdent, à la différence près que la couche épaisse (21) de polyuréthane ou d'une autre matière moulable par injection n'est pas préexistante, mais se trouve formée contre l'armature enfilée sur les pointes (14) lors d'une opération d'injection qui aboutit également à un enrobage de la couche d'armature, ou des couches d'armature, à la formation de l'habillage (15), entre les pointes (14) et les taraudages des inserts qui en comportent un, la ou les couches d'armature pouvant être imprégnées de polyuréthane d'imprégnation, ou d'une autre matière, avant leur mise en place, individuellement ou en sandwich préfabriqué sur les pointes (14).

21. Procédé de fabrication d'un dispositif de jonction selon l'une des revendications 10 à 16, **caractérisé en ce que** pour la fabrication des éléments intermédiaires (4), on utilise des moules de vulcanisation ou d'injection classiques dans lesquels sont calées à leur place les douilles (8), ces éléments étant fabriqués en différentes hauteurs en utilisant des moules différents ou des moules transformables.

22. Procédé de fabrication d'un dispositif de jonction selon l'une des revendications 10 à 16, **caractérisé en ce que** la partie supérieure (2) et la partie inférieure (3) sont assemblées par vissage au moyen de vis (5) traversant successivement les inserts (6'), les douilles (8) et se vissant dans les taraudages des inserts (7').

## Patentansprüche

1. Nicht abschaltbare Verbindungsvorrichtung zur Verbindung der beiden Enden eines Förderbandes, mit einem allgemeinen Profil in H-Form und einem flachen oberen Teil (2), einem flachen unteren Teil (3) und einem mittleren Teil (4) in parallelepipedischer Form, der zwischen dem flachen oberen Teil und dem flachen unteren Teil angeordnet ist, wobei die besagten flachen oberen und unteren Teile aus einem geschmeidigen und elastischen Material bestehen und mit einer Umhüllung (11a, 11b) versehen sind, **dadurch gekennzeichnet, dass** die besagte Umhüllung aus einer oder mehreren Schichten einer Textilfaser besteht, die locker in zwei Richtungen montiert ist.

2. Verbindungsvorrichtung gemäß Anspruch 1, **dadurch gekennzeichnet, dass** die Schicht oder die Schichten der Umhüllung aus einem Gewebe bestehen, das sowohl als Kette als auch als Eintrag locker gewebt ist.

3. Verbindungsvorrichtung gemäß Anspruch 1, **dadurch gekennzeichnet, dass** die Schicht oder die Schichten der Umhüllung aus einem Strickgewebe bestehen, das locker als Kette gestrickt ist und einen eingesetzten Eintrag umfasst, der locker in dem Strickgewebe angeordnet ist.

4. Verbindungsvorrichtung gemäß Anspruch 2 oder 3, **dadurch gekennzeichnet, dass** die Schicht oder die Schichten der Umhüllung so angeordnet sind, dass, im Falle des Gewebes, die Fäden der Kette oder die Fäden des Eintrags des Gewebes in Längsrichtung der Verbindungsvorrichtung angeordnet sind, wobei die Fäden des Eintrags oder die Fäden der Kette in Querrichtung angeordnet sind oder im Falle des Strickgewebes die Kette des Strickgewebes oder der in das Strickgewebe eingesetzte Eintrag in Längsrichtung der Verbindungsvorrichtung ausgerichtet sind, wobei der in das Strickgewebe eingesetzte Eintrag oder die Kette des Strickgewebes in Querrichtung der Verbindungsvorrichtung angeordnet sind.

5. Verbindungsvorrichtung gemäß Anspruch 2 oder 3, **dadurch gekennzeichnet, dass** die Schicht oder die Schichten der Umhüllung so angeordnet sind, dass, im Falle des Gewebes, die Fäden der Kette oder die Fäden des Eintrags des Gewebes so angeordnet sind, dass sie einen Winkel mit der Querrichtung der Verbindungsvorrichtung bilden oder dass, im Falle des Strickgewebes, die Kette des Strickgewebes oder der Eintrag des Strickgewebes so angeordnet ist, dass ein Winkel mit der Querrichtung der Verbindungsvorrichtung gebildet wird.

6. Verbindungsvorrichtung gemäß Anspruch 5, **dadurch gekennzeichnet, dass** der gebildete Winkel etwa 45° beträgt.

7. Verbindungsvorrichtung gemäß einem der vorherigen Ansprüche, **dadurch gekennzeichnet, dass** sie Einsätze (6), (7) umfasst, in der allgemeinen Form von Unterlegscheiben, die entsprechend in den Flügeln des oberen Teils (2) eingebaut sind und in den Flügeln des unteren Teils (3), wobei die besagten Einsätze (6) in ihrem mittleren Bereich Mulden umfassen, die nach unten gerichtet sind und die besagten Mulden in ihrer Mitte ein Loch umfassen, wobei die besagten Einsätze (7) aus einer Unterlegscheibe bestehen, die in ihrer Mitte eine Mulde umfasst, die in dem mittleren Bereich durch einen röhrenförmigen Teil mit Gewinde, der nach oben gerichtet ist, verlängert wird.

8. Verbindungsvorrichtung gemäß Anspruch 7, **dadurch gekennzeichnet, dass** die Löcher der Mulden der Einsätze (6) einen Durchmesser haben, der größer ist als der Durchmesser der Schraubengewinde (5).

9. Verbindungsvorrichtung gemäß Anspruch 7, **dadurch gekennzeichnet, dass** die Einsätze (6) und (7) jeweils mindestens einen Nocken (18) umfassen, der sich auf dem Umfang der Unterlegscheiben der Einsätze (6) und (7) befindet und in der gleichen Richtung ausgerichtet ist, wie die entsprechenden Mulden der Einsätze.

10. Verbindungsvorrichtung gemäß Anspruch 8, **dadurch gekennzeichnet, dass** die Nocken (18) in die Umhüllung des Flügels gesteppt sind, in die die entsprechenden Einsätze eingebaut sind.

11. Verbindungsvorrichtung gemäß einem der vorherigen Ansprüche, die aus drei unterschiedlichen Teilen besteht, die durch Verschraubung montiert und zwar:
- einem flachen oberen Teil (2), der im mittleren Bereich zwischen dem linken und rechten Flügel der Einsätze (6'), entsprechend den Einsätzen (7) Flügel des unteren Teils (3) umfasst, mit dem Unterschied, dass ihr röhrenförmiger Teil, der nach unten gerichtet ist, innen glatt ist und nicht mit einem Gewinde versehen ist,
- einem flachen unteren Teil (3), der in seinem mittleren Bereich Einsätze (7') umfasst, die den Einsätzen (7) der Flügel des flachen unteren Teils (3) entsprechen,
- einem Zwischenteil (4) in parallelepipedischer Form, der zwischen den mittleren Bereichen der oberen Teile (2) und unteren Teile (3) angeordnet ist und eingebaute Hülsen umfasst, die senkrecht in dem Zwischenelement angeordnet sind und zwar so, dass sie fluchtend mit den röhrenförmigen Teilen der Einsätze (6') und (7') positioniert werden können, wobei der Innendurchmesser (D1) der Hülsen (8) ein wenig größer ist als der Durchmesser (D2) des Teils der oberen Platte (2), die den röhrenförmigen Teil der Einsätze (6') umhüllt und entsprechend dem Durchmesser (D3) des Teils der unteren Platte 3, die den röhrenförmigen Teil der Einsätze (7') umhüllt,
- diese drei Teile, die mit Hilfe von Schrauben (5) montiert sind, verlaufen in den Einsätzen (6') und in den Hülsen (8) und sind in den Innengewinden der Einsätze (7') verschraubt.

12. Verbindungsvorrichtung gemäß Anspruch 10, **dadurch gekennzeichnet, dass** die flachen oberen Teile (2) sowie die flachen unteren Teile (3) jeweils aus einer Schicht aus Kautschuk (21) oder aus einem Synthesematerial bestehen unter beziehungsweise auf der sich die Einsätze (6, 6', 7, 7') befinden und zwar so, dass ihre Mulden oder gegebenenfalls ihre röhrenförmigen Teile, was die oberen Platten (2) betrifft, nach unten gerichtet sind und nach oben, was die unteren Platten (3) betrifft, wobei eine oder mehrere Gewebe- oder Strickgewebeschichten der Umhüllung unter den Einsätzen angeordnet sind, was die oberen Platten betrifft und auf den Einsätzen, was die unteren Platten betrifft und zwar so, dass die Gewebe- oder Strickgewebeschicht (en) auf jeder Seite mit einer dünnen Schicht eines Bestandmaterials beschichtet sind, das für die Vulkanisierung oder das Gießen mit der Schicht (21) identisch oder kompatibel ist, die relativ dick ist im Vergleich zu den Schichten des Bestandmaterials, die die Gewebe- oder Strickgewebeschichten trennen und umhüllen, die die Umhüllung bilden, wobei die besagten Schichten des Bestandmaterials mit der oder den Gewebe- oder Strickgewebeschichten sowie mit der dicken Schicht (21) des Bestandmaterials eine Einheit bilden.

13. Verbindungsvorrichtung gemäß Anspruch 11, **dadurch gekennzeichnet, dass** die Gewebe- oder Strickgewebeschichten sowie die feinen Schichten des Bestandmaterials, die sie trennen und umhüllen, wobei sie mit ihnen eine Einheit bilden, gegen die Außenfläche des röhrenförmigen Teils der Einsätze gerichtet sind, die davon eine umfassen, das heißt die Einsätze (7, 7' und 6') an denen sie haften, wobei das Ende des röhrenförmigen Teils der Einsätze (7, 7' und 6'), das mit einem Gewinde versehen ist oder nicht, ausgespart wird.

14. Verbindungsvorrichtung gemäß Anspruch 12, **dadurch gekennzeichnet, dass** die Innengewinde der röhrenförmigen Teile der Einsätze (7, 7', und 6') mit einer Schicht Bestandmaterial umhüllt sind, die die Hohlräume der Gewinde füllt.

15. Verbindungsvorrichtung gemäß einem der vorherigen Ansprüche, **dadurch gekennzeichnet, dass** es sich bei den Schrauben (5), die für die Montage der Verbindungsvorrichtungen gemäß der Erfindung sowie zur Befestigung an den Enden eines Förderbandes eingesetzt werden, um selbstschneidende Schrauben handelt.

16. Verbindungsvorrichtung gemäß Anspruch 14, **dadurch gekennzeichnet, dass** die Schrauben (5) einen Außengewindedurchmesser haben, der größer ist als der Innengewindedurchmesser der röhrenförmigen Teile der Einsätze (7, 7', und 6').

17. Verbindungsvorrichtung gemäß Anspruch 15, **dadurch gekennzeichnet, dass** die Schrauben (5) eine andere Steigung haben, als die Innengewinde der röhrenförmigen Teile der Einsätze (7, 7', und 6').

18. Verfahren zur Herstellung einer Verbindungsvorrichtung gemäß einem der Ansprüche 10 bis 16, **dadurch gekennzeichnet, dass** man für die Herstellung der oberen und unteren Platten aus vulkanisierbarem Kautschuk zwei halbe Gießformen benutzt, von denen eine mit Spitzen (14) versehen ist, die vom Boden der Gießform ausgehen und dadurch, dass man die folgenden aufeinanderfolgenden Arbeitsgänge durchführt:
a) eine relativ dicke Schicht (21) aus vulkanisierbarem Kautschuk, die auf die Spitzen gefädelt ist, bis sie den Boden der Gießform erreicht,
b) Man fädelt auf die Spitzen der Einsätze (6, 6', 7, 7') die Mulden und röhrenförmigen Teile auf, die gegenüber der relativ dicken Schicht (12) aus vulkanisierbarem Kautschuk ausgerichtet sind,
c) Man fädelt auf die Spitzen die Gewebe- oder Strickgewebeschicht (en) der Umhüllung auf, die zuvor mit einer dünnen Schicht aus vulkanisierbarem Kautschuk umhüllt wurde und zwar so, dass im Falle einer einzigen Gewebe- oder Strickgewebeschicht der Umhüllung letztere auf beiden Seiten mit einer dünnen Schicht aus vulkanisierbarem Kautschuk umhüllt wird und mit ihr eine Einheit bildet und ihre Handhabung erleichtert und dass in dem Fall, wo es sich um zwei oder mehrere Gewebe- oder Strickgewebeschichten handelt, die Schichten durch eine oder mehrere dünne Schichten aus vulkanisierbarem Kautschuk getrennt werden, die mit ihnen eine Einheit bilden, wobei die Außenseiten der unteren und oberen Schichten des so gebildeten Verbundwerkstoffs mit einer dünnen Kautschukschicht umhüllt sind, die mit ihr eine Einheit bilden, wobei die so gebildete Umhüllung entlang der Außenfläche röhrenförmige Teile der Einsätze (7, 7', 6') hochgezogene Teile bildet, die Folgendes umfassen,
d) die obere halbe Gießform wird auf der unteren halben Gießform positioniert, wobei der Druck so eingesetzt wird, dass die Gießform geschlossen wird und die Vulkanisierung auf bekannte Art und Weise durchgeführt werden kann,
e) unter der Einwirkung der Drucks presst sich die dicke Schicht (21) aus vulkanisierbarem Kautschuk gegen die Umhüllung und schließt dabei die Einsätze ein und fließt in die Gießform und füllt dabei vor allem den Raum zwischen den Gewinden der Einsätze (7, 7', 6') und den Spitzen (14) auf denen diese Einsätze eingefädelt sind,
f) das Ausformen erfolgt durch Entfernen der gegossenen Teile der Spitzen (14).

19. Verbindungsvorrichtung gemäß Anspruch 17, **dadurch gekennzeichnet, dass** die Gewebe- oder Strickgewebeschichten der Umhüllung nacheinander aufgetragen werden, wobei die Schichten zuvor jeweils mit einer dünnen Schicht aus vulkanisierbarem Kautschuk umhüllt werden.

20. Verfahren zur Herstellung einer Verbindungsvorrichtung gemäß einem der Ansprüche 1 bis 16 und teilweise gemäß Anspruch 17 oder Anspruch 18, **dadurch gekennzeichnet, dass** das eingesetzte Material ein Polyurethan ist oder ein anderes Material, das durch Einspritzung abgeformt werden kann, wobei das Herstellungsverfahren dem Verfahren gemäß den vorherigen Ansprüchen 18 und 19 entspricht, mit dem Unterschied, dass die dicke Schicht (21) aus Polyurethan oder einem anderen Material, das durch Einspritzung abgeformt werden kann, vorher nicht existiert, jedoch gegen die Umhüllung geformt wird, die während eines Einspritzungsvorgangs auf die Spitzen (14) gefädelt wurde, der außerdem zu einer Umhüllung der Schicht der Umhüllung oder der Schichten der Umhüllung führt, zur Bildung der Ummantelung (15) zwischen den Spitzen (14) und den Innengewinden der Einsätze, die davon eine umfassen, wobei die Schicht (en) der Umhüllung vor ihrem Einsatz mit Polyurethan oder einem anderen Material individuell oder als vorgefertigter Verbundwerkstoff auf den Spitzen (14) imprägniert werden können.

21. Verfahren zur Herstellung einer Verbindungsvorrichtung gemäß einem der Ansprüche 1 bis 16, **dadurch gekennzeichnet, dass** man für die Herstellung der Zwischenelemente (4) klassische Gießformen zur Vulkanisierung oder Einspritzung benutzt, in denen die Hülsen (8) auf ihrem Platz verkeilt sind, wobei diese Elemente durch Einsatz verschiedener Gießformen oder veränderbarer Gießformen in verschiedenen Höhen hergestellt werden.

22. Verfahren zur Herstellung einer Verbindungsvorrichtung gemäß einem der Ansprüche 10 bis 16, **dadurch gekennzeichnet, dass** der obere Teil (2) und der untere Teil (3) durch Verschraubung mit Hilfe von Schrauben (5) montiert werden, die nacheinander durch die Einsätze (6') und die Hülsen (8) verlaufen und in den Innengewinden der Einsätze (7') zusammengeschraubt werden.

## Claims

1. Non-disconnectable junction device, designed to connect the two ends of a conveyor belt, with a generally H-shaped profile comprising a flat upper part (2), a flat lower part (3), and an intermediate median part (4) with a parallelepiped shape arranged between the flat upper part and the flat lower part, the said flat upper and lower parts being made from a flexible and elastic material and provided with reinforcement (11a, 11b), **characterised in that** the said reinforcement is composed of one or several layers of a textile material assembled loosely in two directions.

2. Junction device according to claim 1, **characterised in that** the reinforcement layer(s) is (are) composed of a woven fabric with a loose warp and a loose weft.

3. Junction device according to claim 1, **characterised in that** the reinforcement layer(s) is (are) composed of a knit with a loose warp and comprising an inserted weft arranged loosely in the knit.

4. Junction device according to claim 2 or 3, **characterised in that** the reinforcement layer(s) is (are) arranged such that in the case of the fabric, the warp threads or the weft threads of the fabric are arranged in the longitudinal direction of the junction device, the warp threads or the weft threads being in the transverse direction, or in the case of the knit, the warp of the knit or the weft inserted in the knit are arranged in the longitudinal direction of the junction device, the weft inserted in the knit or the warp of the knit being arranged in the transverse direction of the junction device.

5. Junction device according to claim 2 or 3, **characterised in that** the reinforcement layer(s) is (are) arranged such that in the case of the fabric, the warp threads or the weft threads of the fabric are arranged at an angle from the transverse direction of the junction device, or in the case of the knit, the warp of the knit or the weft of the knit is arranged in an angle from the transverse direction of the junction device.

6. Junction device according to claim 5, **characterised in that** the angle formed is approximately 45°.

7. Junction device according to any one of the previous claims, **characterised in that** it comprises generally disc shaped inserts (6), (7) incorporated into the sides of the upper part (2) and into the sides of the lower part (3), the said inserts (6) comprising concave sides facing downwards in their central area and the said concave sides comprising a hole in their centre, the said inserts (7) being composed of a disc with a dish in its centre prolonged in its central area by a tubular part facing upwards in which a tapped thread is formed.

8. Junction device according to claim 7, **characterised in that** the holes of the concave sides of the inserts (6) have a diameter greater than the diameter of the threads of the screw (5).

9. Junction device according to claim 7, **characterised in that** the inserts (6) and (7) each comprises at least one pin (18) at the periphery of the discs of the inserts (6) and (7), and facing the same direction as the corresponding concave sides of the inserts.

10. Junction device according to claim 8, **characterised in that** the pins (18) are stitched in the reinforcement of the side in which the corresponding inserts are located.

11. Junction device according to any one of the previous claims, composed of three separate parts assembled by screwing, namely:
- a flat upper part (2) comprising inserts (6') similar to the inserts (7) in the sides of the lower part (3), in its median area between the left and right sides of the inserts (6'), with the difference that the tubular part facing downwards is smooth inside instead of being tapped,
- a flat lower part (3) comprising inserts (7') in its median area identical to the inserts (7) in the sides of the flat lower part,
- an intermediate parallelepiped shaped element (4) arranged between the median areas of the upper part (2) and the lower part (3), comprising built-in bushings arranged vertically in the intermediate element such that they can be placed in alignment with the tubular parts of the inserts (6') and (7'), the inside diameter (D1) of the bushings (8) being slightly greater than the diameters (D2) of the part of the upper plate (2) encasing the tubular part of the inserts (6') and the diameter (D3) of the part of the lower plate (3) encasing the tubular part of the inserts (7'),
- these three parts being assembled by screws (5) passing through the inserts (6') passing inside the bushings (8) and screwed into the threads of the inserts (7').

12. Junction device according to claim 10, **characterised in that** the flat upper parts (2) and the flat lower parts (3) are each composed of a layer (21) of rubber or a synthetic material under which or on top of which the inserts (6, 6', 7, 7') are arranged, such that their concave sides or possibly their tubular parts are facing downwards for the upper plates (2) and upwards for the lower plates (3), one or several layers of fabric or reinforcement knit being arranged under the inserts for the upper plates and on top of the inserts for the lower plates, such that the layer(s) of fabric or knit is (are) coated with a thin layer of material on each side with an identical or compatible composition for vulcanisation or moulding with the layer (21) that is relatively thick compared with the layers of component material separating and covering the layers of fabric or knit making up the reinforcement, the said layers of component material forming an integral part with the layer(s) of fabric or knit, and with the thick layer (21) of component material.

13. Junction device according to claim 11, **characterised in that** the layers of fabric or knit, and the thin layers of component material that separate them and cover them while forming an integral part of them, are raised against the outside surface of the tubular part of the inserts that include one, in other words the inserts (7, 7' and 6') to which they bond, leaving the end of the tubular and possibly, but not necessarily, tapped part of the inserts (7, 7' and 6').

14. Junction device according to claim 12, **characterised in that** the tappings in the tubular parts of the inserts (7, 7' and 6') are cladded with a layer of component material that fills in the hollows in the threads.

15. Junction device according to any one of the previous claims, **characterised in that** the screws (5) used for the assembly of the junction devices according to the invention, and for their attachment to the ends of a conveyor belt, are self-tapping screws.

16. Junction device according to claim 14, **characterised in that** the diameter of the male thread on the screws (5) is greater than the diameter of the female threads in the tappings in the tubular parts of the inserts (7, 7' and 6').

17. Junction device according to claim 15, **characterised in that** the pitch of the screws (5) is different from the pitch of the tapped threads in the tubular parts of the inserts (7, 7' and 6').

18. Manufacturing process for a junction device according to any one of claims 10 to 16, **characterised in that** two half moulds are used for manufacturing the upper and lower plates made of vulcanisable rubber, one being fitted with nails (14) fixed to the bottom of the mould, and **in that** the following operations are carried out in sequence:
a) a relatively thick layer (21) of vulcanisable rubber is inserted on the nails as far as the bottom of the mould,
b) the inserts (7, 7' and 6') are slipped onto the nails, and the concave sides and tubular parts being oriented in the opposite direction to the relatively thick layer (21) made of vulcanisable rubber,
c) the layer(s) of fabric or reinforcement knit, previously coated with a thin layer of vulcanisable rubber are slipped onto the nails, such that in the case of a single layer of fabric or reinforcement knit, this layer is coated on both sides with a thin layer of vulcanisable rubber forming an integral part with it and facilitating its manipulation, and in the case in which there are two or several layers of fabric or knit, the layers are separated by one or several thin layers of vulcanisable rubber forming an integral part with it, the outside faces of the lower and upper layers of the sandwich thus formed being coated with a thin layer of rubber forming an integral part with it, the reinforcement thus made forming parts upstanding along the outside surface of the tubular parts of the inserts (7, 7' and 6') on which they are provided,
d) the upper half-mould is put into place onto the lower half-mould, pressure is applied so as to close the mould and so that vulcanisation can be performed in a known manner,
e) under the effect of pressure, the thick layer (21) of vulcanisable rubber is brought into contact with the reinforcement by closing the inserts, and creeps in the mould in particular filling up the space between the threads of the inserts (7, 7' and 6') and the nails (14) onto which these inserts are slipped,
f) the moulded parts are removed from the nails (14) to remove them from the mould.

19. Junction device according to claim 17, **characterised in that** the layers of reinforcement fabric or knit are applied in sequence, the layers previously being coated with a thin layer of vulcanisable rubber.

20. Process for manufacturing a junction device according to any one of claims 1 to 16, and partially according to claim 17 or claim 18, **characterised in that** the material used is a polyurethane or another material that can be moulded by injection, the manufacturing process being similar to the process according to claims 18 and 19 above, with the difference that the thick layer (21) of polyurethane or other material that can be moulded by injection does not exist in advance, but is formed in contact with the reinforcement slipped on the nails (14) during an injection operation that also coats the layer or layers of reinforcement, and causes the formation of the cladding (15) between the nails (14) and the tapped threads of the inserts that have a tapped thread, the reinforcement layer(s) possibly being impregnated with an impregnation polyurethane or another material before being placed individually or in a prefabricated sandwich on the nails (14).

21. Process for manufacturing a junction device according to any one of claims 10 to 16, **characterised in that** conventional vulcanisation or injection moulds are used for manufacturing intermediate elements (4), in which bushings (8) are inserted, these elements being made with different heights and using different moulds or transformable moulds.

22. Process for manufacturing a junction device according to any one of claims 10 to 16, **characterised in that** the upper part (2) and the lower part (3) are assembled by screwing using screws (5) passing in sequence through the inserts (6'), the bushings (8) and screwing into the tapped threads of the inserts (7').
